# EUROPÄISCHE PATENTSCHRIFT

(11) **EP 2 807 317 B1**
(45) Veröffentlichungstag und Bekanntmachung des Hinweises auf die Patenterteilung: **30.12.2015**
(21) Anmeldenummer: 13701908.9
(22) Anmeldetag: 18.01.2013
(51) Int. Cl.: E04H 12/08, F03D 11/04, E04H 12/16

(54) **HYBRIDTURM**
HYBRID TOWER
TOUR HYBRIDE

(30) Priorität: 23.01.2012 DE 102012001109
(43) Veröffentlichungstag der Anmeldung: 03.12.2014
(73) Patentinhaber: Drössler GmbH Umwelttechnik, 57080 Siegen (DE)
(72) Erfinder: LENZING, Peter, 57223 Kreuztal (DE)
(74) Vertreter: Grosse, Wolf-Dietrich Rüdiger
(86) Internationale Anmeldenummer: PCT/EP2013/000146
(87) Internationale Veröffentlichungsnummer: WO 2013/110448

(56) Entgegenhaltungen:
- EP-A1- 1 947 328
- DE-A1-102010 039 796
- DE-B3- 10 230 273
- US-A1- 2011 138 704

## Beschreibung

Die Erfindung betrifft einen Hybridturm mit einem aus Beton bestehenden rohrförmigen unteren Turmabschnitt und einem aus Stahl bestehenden rohrförmigen oberen Turmabschnitt sowie mit einem zwischen den beiden Turmabschnitten angeordneten Adapter zum Verbinden der beiden Turmabschnitte.

Die EP 1 654 460 B1 offenbart einen Hybridturm, bei dem ein Verankerungselemente aufweisender Endbereich des Turmabschnittes aus Metall in den Turmabschnitt aus Beton eingelassen ist. Als Alternative wird hier vorgeschlagen, den Endbereich des Turmabschnittes aus Metall über eine schwierig herzustellende Dichtung auf den Turmabschnitt aus Beton aufzusetzen, und über Spannlitzen die beiden Turmabschnitte gegeneinander zu verspannen.

Durch die DE 10 2010 039 796 A1 ist ein Hybridturm bekannt geworden, bei dem das Adapterstück einen ringförmigen, im Querschnitt auf dem Kopf stehenden U-förmigen Metallring aufweist. Zur Herstellung des Adapters wird der Metallring, der immerhin einen Durchmesser von 4,50 m aufweisen kann, aufwendig um 180° gedreht, so dass in die dann vorliegende U-Form Beton gegossen werden kann. Dabei müssen neben Hüllrohren für die Spannlitzen zusätzlich noch eine große Anzahl von Ankern gesetzt werden, an denen später der obere Turmabschnitt angeschraubt werden kann. Damit werden die Zug- und Biegekräfte vom oberen Turmabschnitt über die Ankerelemente in den Betonkörper des Adapters eingeleitet und von diesem über den U-förmigen Flansch auf die Zuglitzen übertragen. Neben der sehr aufwendigen Herstellung dieses Adapters ist auch das Einleiten der Kräfte vom oberen Turmabschnitt in den unteren Turmabschnitt problematisch.

Die EP 2 282 051 offenbart die Verschraubung der Gondel einer Windkraftanlage an der Spitze eines Betonturms. Es wird aber auch ein Adapter aufgezeigt, der vollkommen aus Metall besteht, und der mit der Spitze eines Betonturms verschraubt ist.

Die DE 20 2006 009 554 U1 offenbart ein Stahladapterelement, welches die Spitze eines Betonturms umgibt und über in die Wandung des Betonturms ragende Verankerungselemente mit dem Betonturm verbunden ist.

Die DE 102 30 273 B3 offenbart einen Metalladapter, bei dem die Spannlitzen außen am Turm geführt sind, und daher aufwändig durch Verkleidungsbelche geschützt werden müssen.

Die DE 10 2007 031 065 offenbart einen Hybridturm, bei dem der Adapter aus einem Betonring besteht, der Hüllrohre zur Aufnahme von Ankerbolzen aufweist, mittels derer der obere Turmabschnitt am Adapter befestigt wird. Zusätzlich sind auch hier im Beton eingelassene Spannlitzen, die den unteren Turmabschnitt vorspannen, vorgesehen. Auch hier müssen zusätzlich Hüllrohren für die Spannlitzen weitere Hüllrohre für die Ankerbolzen zunächst justiert und dann eingegossen werden, was die Herstellung des Adapters kompliziert und verteuert.

Die DE 20 2006 009 554 U1 offenbart einen Adapter mit einem ringförmigen Betonelement, welches von einem Stahlelement umgeben ist. Dabei weist das Stahlelement eine große Anzahl von Verankerungselementen auf, über welche der Betonring mit dem Stahladapterelement verbunden ist. Das Betonelement weist wiederum Hüllrohre für die Spannlitzen auf. Die Zug- und Druckkräfte, die am oberen Turmabschnitt auftreten können, müssen dabei komplett über die Ankerelemente in den Betonring eingeleitet werden.

Der Erfindung liegt die Aufgabe zugrunde, einen Hybridturm so weiterzuentwickeln, dass dessen Adapter günstig hergestellt werden kann und dennoch die am oberen Turmabschnitt entstehenden Zug- bzw. Druckkräfte problemlos auf den unteren Turmabschnitt übertragen werden können.

Die Aufgabe wird dadurch gelöst, dass der Adapter aus einem im Schnitt annähernd C-förmig ausgestalteten Ring aus Stahl besteht, dass das die Schenkel des C-förmigen Rings verbindende Joch den Außenbereich des Rings bildet, dass der untere Schenkel über den Ring verteilt angeordnete Bohrungen zur Aufnahme der Spannlitzen des unteren Turmabschnitts aufweist, dass der obere Schenkel des C-förmigen Rings ebenfalls über den Ring verteilt angeordnete Bohrungen zur Aufnahme von Befestigungsschrauben für den oberen Turmabschnitt aufweist, dass der untere Schenkel des C-förmigen Rings auf der Krone des unteren Turmabschnitts aufgesetzt ist und dass der Adapter mittels der Spannlitzen in dem unteren Turmabschnitt mit vorgespannt ist.

Damit werden am, mit dem Adapter fest verbundenen oberen Turmabschnitt entstehende Druckkräfte über das Joch auf den unteren Schenkel und von diesem direkt auf den unteren Turmabschnitt übertragen. Zugkräfte werden über das Joch und den unteren Schenkel in die Spannlitzen eingeleitet, so dass sich das Vorsehen von Ankerbolzen erübrigt. Dadurch ist der Adapter kostengünstig herzustellen und leitet dennoch Zug- oder Druckkräfte, die am oberen Turmabschnitt entstehen, optimal in den unteren Turmabschnitt ein.

Eine besonders gute Verteilung der insbesondere möglichen auftretenden Zugkräfte ergibt sich, wenn der C-förmige Ring im unteren Bereich mit Beton verfüllt ist und die Bohrungen im unteren Schenkel des C-förmigen Rings von Hüllrohren für die Spannlitzen übergriffen sind.

Durch den in den Ring eingebrachten Beton lassen sich die Zugkräfte der Spannlitzen sehr gut auf die unteren Schenkel verteilen, so dass die Spann- bzw. Zugkräfte optimaler in den unteren Turmabschnitt eingeleitet werden können.

Es hat sich bewährt, dass am dem Joch gegenüber liegenden Ende des unteren Schenkels ein aufstehender, kreisförmiger Flansch als verlorene Schalung ausgebildet ist.

Diese Schalung kann in ihrer Höhe der Höhe des einzubringenden Fertigbetons entsprechen. Sie kann jedoch auch niedriger liegen und als Anschlag für eine weitere aufzusetzende Schalung dienen.

Es empfiehlt sich, dass sich das umlaufende Joch über die Anbindung des unteren Steges hinaus nach unten erstreckt und einen umlaufenden Sicherungsring zur Lagesicherung des Adapters auf dem unteren Turmabschnitt bildet.

Dieser Sicherungsring dient insbesondere beim Aufbau des Turms zur Zentrierung des Adapters auf dem unteren Turmabschnitt und zur Lagesicherung des Adapters auf dem unteren Turmabschnitt. Es besteht aber auch die Möglichkeit, dass anstelle eines umlaufenden Sicherungsrings ein mit Unterbrechung versehener Sicherungsring in Form von z. B. drei Nasen, die im Abstand von z. B. 120° angeordnet sind, vorgesehen ist.

Es hat sich als vorteilhaft erwiesen, dass die Krone des unteren Turmabschnitts mindestens eine Ausnehmung zur Aufnahme des Sicherungsrings aufweist. Damit ist gewährleistet, dass der Turm nach außen eine glatte Oberfläche aufweist und der Sicherungsring nicht vorspringt.

Zweckmäßig kann aber auch sein, dass der untere Schenkel in dem auf der Krone des unteren Turmabschnittes aufliegenden Bereich mindestens eine Durchbrechung aufweist, und dass die Durchbrechung ein Verbindungselement aufnimmt, wobei die Krone des unteren Turmabschnitts mindestens eine Ausnehmung zur Aufnahme des Verbindungselementes aufweisen sollte. Auch damit ist eine Zentrierung des Adapters auf dem unteren Turmabschnitt möglich.

Nachahmenswert ist, dass die Krone des unteren Turmabschnitts als ein aus Fertigbeton gefertigter Ring ausgebildet ist. Wird der untere Turmabschnitt z. B. aus einzelnen Segmenten aufgebaut, so ergeben sich senkrechte Fugen auf der Krone des unteren Turmabschnittes. Hier könnte der Adapter, der mit einem unteren Steg auf der mit Fugen versehene Krone aufgelegt werden. Sauberer lässt sich der Adapter jedoch an einen entsprechenden aus Beton gefertigten keine Unterbrechungen aufweisenden Ring aufsetzen.

Bemerkenswert ist, dass der Ring als Übergang nicht nur von einem runden segmentierten Turmabschnitt auf einen runden geschlossenen Turmabschnitt, sondern auch von einem eckigen segmentierten Turmabschnitt auf einen runden geschlossenen Turmabschnitt ausgebildet sein kann. Damit kann der untere Turmabschnitt sowohl rund als auch mehreckig ausgebildet werden. Es muss lediglich der entsprechend passende Ring verwendet werden.

Die Erfindung wird anhand einer Zeichnung näher erläutert. Dabei zeigt
- Figur 1: zeigt einen erfindungsgemäßen Adapter in geschnittener Darstellung,
- Figur 2: den Ausschnitt eines erfindungsgemäßen Adapters,
- Figur 3: einen erfindungsgemäßen Übergangsring, und
- Figur 4: den Ausschnitt eines weiteren erfindungsgemäßen Adapters.

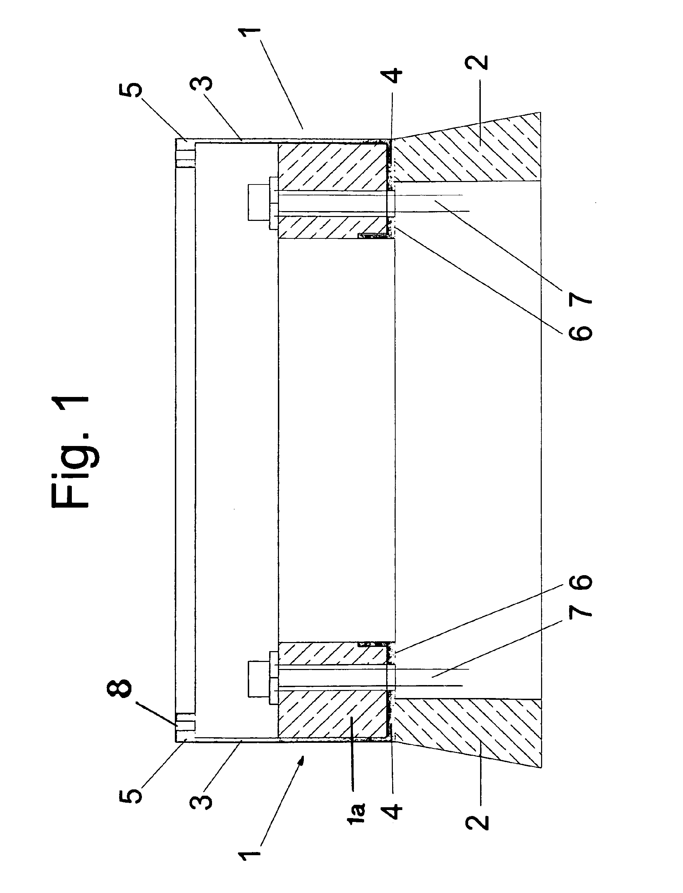

In der Figur 1 ist ein Adapter 1 zu erkennen, der auf einem Ring 2, der als Übergangsring dient, aufgesetzt ist. Der Adapter 1 besteht im Wesentlichen aus einem C-förmigen Ring aus Stahl mit einem nach außen weisenden Joch 3, dem unteren Schenkel 4 sowie dem oberen Schenkel 5. Im unteren Schenkel 4 sind Bohrungen 6 angeordnet, die zum Aufnehmen von Spannlitzen 7 dienen. Über die Spannlitzen 7 kann der Adapter 1 mit dem Ring 2 und dem darunter befindlichen Turm aus Beton verspannt werden. Der in dem Adapter 1 vorgesehene Betonring 1 a dient dabei zur Verteilung der Spannkräfte auf den unteren Schenkel 4.

Am oberen Schenkel 5 sind Bohrungen 8 vorgesehen, die zur Aufnahme von Befestigungselementen, z. B. Schraube-Mutter-Verbindungen dienen über welche der obere Turmabschnitt mit dem Adapter 1 verbunden werden kann. Selbstverständlich könne die Bohrungen 8 auch Gewinde aufweisen, die mit den Befestigungsschrauben zusammenwirken.

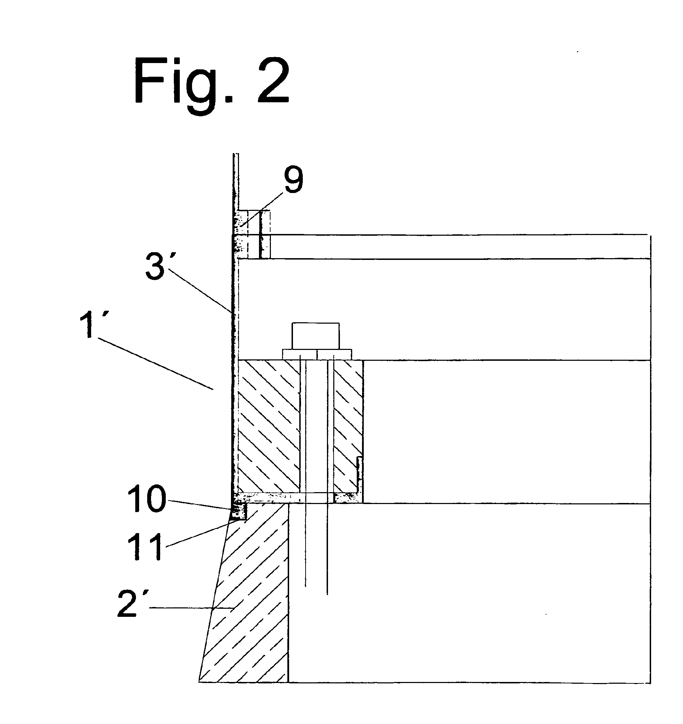

Die Figur 2 zeigt einen Ausschnitt eines Adapters 1', auf dessen oberen Schenkel 5 der Flansch 9 eines unteren Schusses des oberen Turmabschnittes aufliegend dargestellt und über schrauben mit dem Adapter 1' verbunden ist. Am unteren Ende des Joches 3' ist ein Sicherungsring 10 gezeigt, der in entsprechende Ausnehmungen 11 des Ringes 2' eingreift. Damit ist der Adapter 1' in seiner Lage in horizontaler Richtung auf dem Ring 2' gesichert.

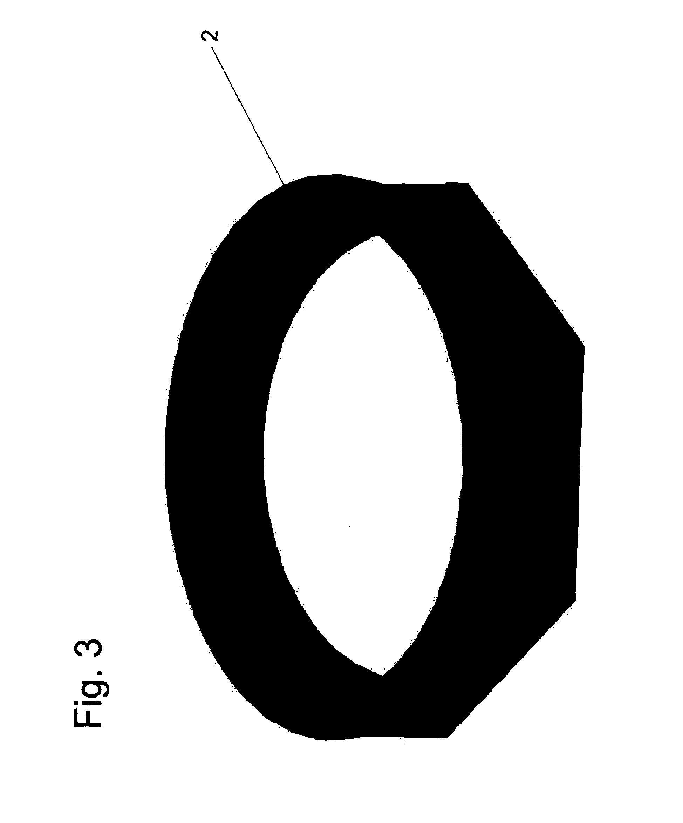

Figur 3 zeigt einen Ring 2 als Übergangsring, der von einer eckigen Form im unteren Bereich auf eine runde Form überspringt. Dieser Ring kann auf einen im vorliegenden Fall achteckigen unteren Turmabschnitt aufgesetzt werden und bietet dem aufzusetzenden Adapter 1 eine optimale Auflagefläche.

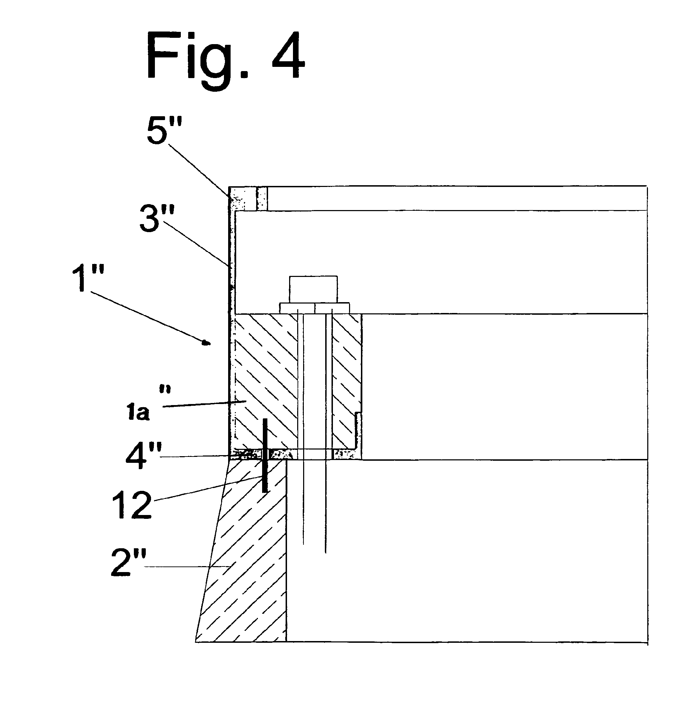

Figur 4 zeigt einen Ausschnitt eines Adapters 1" der auf dem Ring 2" aufliegt. Der untere Schenkel 4" weist eine Durchbrechung auf, die ein Verbindungselement 12 aufnimmt. Das Verbindungselement erstreckt sich sowohl in eine Ausnehmung im Ring 2" als auch in eine Ausnehmung im Betonring 1a".

### Bezugszeichenübersicht

- 1: Adapter
- 2: Ring
- 3: Joch
- 4: unterer Schenkel
- 5: oberer Schenkel
- 6: Bohrung
- 7: Spannlitze
- 8: Bohrung
- 9: Flansch
- 10: Sicherungsring
- 11: Ausnehmung
- 12: Verbindungselement

## Patentansprüche

1. Hybridturm, vorzugsweise für Windenergieanlagen, mit einem unteren, aus Betonfertigteilen zusammengesetzten, über Spannlitzen (7) verspannten rohrförmigen unteren Turmabschnitt und einem aus Stahl bestehenden, vorzugsweise aus einzelnen Rohrschüssen zusammengesetzten rohrförmigen oberen Turmabschnitt sowie mit einem zwischen den beiden Turmabschnitten angeordneten, aus einem im Schnitt annähernd C-förmig ausgestalteten Ring aus Stahl bestehenden Adapter (1) zum Verbinden der Turmabschnitte, wobei das die Schenkel (4, 5) des C-förmigen Rings verbindende Joch (3) den Außenbereich des Rings bildet, der untere Schenkel (4) über den Ring verteilt angeordnete Bohrungen (6, 6'..) zur Aufnahme der Spannlitzen (7, 7' ...) des unteren Turmabschnittes aufweist, der obere Schenkel (5) des C-förmigen Rings ebenfalls über den Ring verteilt angeordnete Bohrungen (8, 8' ...) zur Aufnahme von Befestigungsschrauben für den oberen Turmabschnitt aufweist, der untere Schenkel (4) des C-förmigen Rings auf der Krone des unteren Turmabschnittes aufgesetzt ist, der Adapter (1) mittels der Spannlitzen (7, 7' .) in dem unteren Turmabschnitt mit vorgespannt ist, und wobei die Bohrungen (6, 6' ..) im unteren Schenkel (4) des C-förmigen Rings von Hüllrohren für die Spannlitzen übergriffen sind, und der C-förmige Ring im unteren Bereich, die Hüllrohre umgebend, mit Beton gefüllt ist.

2. Hybridturm nach Anspruch 1,
**dadurch gekennzeichnet,**
**dass** am, dem Joch (3) gegenüberliegenden Ende des unteren Schenkels (4) ein aufstehender, kreisförmiger Flansch als verlorene Schalung ausgebildet ist.

3. Hybridturm nach Anspruch 1 oder 2,
**dadurch gekennzeichnet,**
**dass** sich das umlaufende Joch (3) über die Anbindung des unteren Schenkels (4) hinaus nach unten erstreckt und einen umlaufenden Sicherungsring (10) zur Lagesicherung des Adapters (1) auf dem unteren Turmabschnitt bildet.

4. Hybridturm nach Anspruch 1 oder 2,
**dadurch gekennzeichnet,**
**dass** sich das umlaufende Joch (3) bereichweise über die Anbindung des unteren Schenkels (4) hinaus nach unten erstreckt und einen mit Unterbrechungen versehenen Sicherungsring zur Lagesicherung des Adapters (1) auf dem unteren Turmabschnitt bildet.

5. Hybridturm nach Anspruch 3 oder 4,
**dadurch gekennzeichnet,**
**dass** die Krone des unteren Turmabschnittes mindestens eine Ausnehmung (11) zur Aufnahme des Sicherungsrings (10) aufweist.

6. Hybridturm nach einem der Ansprüche 1 bis 5,
**dadurch gekennzeichnet,**
**dass** der untere Schenkel (4) in dem auf der Krone des unteren Turmabschnittes aufliegenden Bereich mindestens eine Durchbrechung aufweist, dass die Durchbrechung mindestens einer Ausnehmung in der Krone des unteren Turmabschnittes gegenüber angeordnet ist, und dass die Durchbrechung und die Ausnehmung ein Verbindungselement (12) aufnimmt.

7. Hybridturm nach einem der Ansprüche 1 bis 6,
**dadurch gekennzeichnet,**
**dass** die Krone des unteren Turmabschnittes als ein aus Fertigbeton gefertigter Ring (2, 2') ausgebildet ist.

8. Hybridturm nach Anspruch 7,
**dadurch gekennzeichnet,**
**dass** der Ring (2, 2') als Übergang von einem runden oder eckigen segmentierten Turmabschnitt aus Beton auf einen runden geschlossenen Turmabschnitt aus Beton ausgebildet ist.

## Claims

1. A hybrid tower, preferably for wind turbines, with a tubular lower tower section composed of prefabricated concrete parts, braced by means of stranded tensioning wires (7), and an upper tubular tower section consisting of steel, preferably composed of individual tubular lengths, together with an adapter (1) consisting of steel, configured as a ring with an approximately C-shaped cross-section, and arranged between the two tower sections for the purpose of connecting the tower sections, wherein the yoke (3), connecting the arms (4, 5) of the C-shaped ring, forms the outer region of the ring, the lower arm (4) has holes (6, 6'...) arranged in a distributed manner over the ring for the purpose of accommodating the stranded tensioning wires (7, 7' ...) of the lower tower section, the upper arm (5) of the C-shaped ring similarly has holes (8, 8' ...) arranged in a distributed manner over the ring for the purpose of accommodating attachment bolts for the upper tower section, the lower arm (4) of the C-shaped ring is positioned on the crown of the lower tower section, the adapter (1) is pre-stressed by means of the stranded tensioning wires (7, 7' ...) in the lower tower section, and wherein the holes (6, 6'...) In the lower arm (4) of the C-shaped ring are overlapped by cladding tubes for the stranded tensioning wires, and the C-shaped ring in the lower region is filled with concrete, enclosing the cladding tubes.

2. The hybrid tower according to claim 1,
**characterised in**
**that** at the end of the lower arm (4) located opposite to the yoke (3) an upright circular flange is formed as lost formwork.

3. The hybrid tower according to claim 1 or 2,
**characterised in**
**that** the circumferential yoke (3) extends downwards beyond the connection of the lower arm (4) and forms a circumferential locking ring (10) for the purpose of securing the location of the adapter (1) on the lower tower section.

4. The hybrid tower according to claim 1 or 2,
**characterised in**
**that** the circumferential yoke (3) extends downwards beyond the connection of the lower arm (4) in some regions and forms a locking ring provided with discontinuities for the purpose of securing the location of the adapter (1) on the lower tower section.

5. The hybrid tower according to claim 3 or 4,
**characterised in**
**that** the crown of the lower tower section has at least one recess (11) for the purpose of accommodating the locking ring (10).

6. The hybrid tower according to any one of the claims 1 to 5,
**characterised in**
**that** the lower arm (4) has at least one opening in the region located on the crown of the lower tower section in that the opening is arranged opposite at least one recess in the crown of the lower tower section, and in that the opening and the recess accommodate a connecting element (12).

7. The hybrid tower according to any one of the claims 1 to 6,
**characterised in**
**that** the crown of the lower tower section is designed as a ring manufactured from precast concrete (2, 2').

8. The hybrid tower according to claim 7,
**characterised in**
**that** the ring (2, 2') is designed as a transition section from a round or polygonal segmented tower section of concrete to a round closed tower section of concrete.

## Revendications

1. Tour hybride, de préférence pour éoliennes, avec une partie de tour inférieure tubulaire, assemblée à partir d'éléments préfabriqués en béton, haubanée par l'intermédiaire de torons de haubanage (7) et une partie de tour supérieure tubulaire se composant d'acier, de préférence assemblée à partir d'éléments de tuyau individuels, ainsi qu'avec un adaptateur (1) disposé entre les deux parties de tour, se composant d'un anneau en acier réalisé sensiblement en forme de C en section transversale pour relier les parties de tour, dans laquelle la palée (3) reliant les branches (4, 5) de l'anneau en forme de C forme la zone extérieure de l'anneau, la branche inférieure (4) présentant des alésages (6, 6'...) disposés de manière répartie sur l'anneau pour la réception des torons de haubanage (7, 7'...) de la partie inférieure de tour, la branche supérieure (5) de l'anneau en forme de C présentant également des alésages (8, 8'...) disposés de manière répartie sur l'anneau en forme de C pour la réception de vis de fixation pour la partie supérieure de tour, la branche inférieure (4) de l'anneau en forme de C étant apposée sur la couronne de la partie inférieure de tour, l'adaptateur (1) étant précontraint au moyen des torons de haubanage (7, 7'...) dans la partie inférieure de tour, et dans laquelle les alésages (6, 6'...) dans la branche inférieure (4) de l'anneau en forme de C sont enjambés par des gaines pour les torons de haubanage et l'anneau en forme de C étant rempli de béton dans la zone inférieure entourant les gaines.

2. Tour hybride selon la revendication 1,
**caractérisée en ce**
**qu'**au niveau de l'extrémité située en vis-à-vis de la palée (3) de la branche inférieure (4), une collerette relevée circulaire est réalisée en tant que coffrage perdu.

3. Tour hybride selon la revendication 1 ou 2,
**caractérisée en ce**
**que** la palée (3) périphérique s'étend vers le bas, au-delà du rattachement de la branche inférieure (4), et forme un circlip périphérique (10) pour le blocage en position de l'adaptateur (1) sur la partie inférieure de tour.

4. Tour hybride selon la revendication 1 ou 2,
**caractérisée en ce**
**que** la palée périphérique (3) s'étend partiellement vers le bas, au-delà du rattachement de la branche inférieure (4), et forme un circlip doté d'interruptions pour le blocage en position de l'adaptateur (1) sur la partie inférieure de tour.

5. Tour hybride selon la revendication 3 ou 4,
**caractérisée en ce**
**que** la couronne de la partie inférieure de tour présente au moins un évidement (11) pour la réception du circlip (10).

6. Tour hybride selon l'une des revendications 1 à 5,
**caractérisée en ce**
**que** la branche inférieure (4) présente au moins une brèche dans la zone reposant sur la couronne de la partie inférieure de tour, en ce que la brèche est disposée en vis-à-vis d'au moins un évidement dans la couronne de la partie inférieure de tour, et en ce que la brèche et l'évidement réceptionnent un élément de liaison (12).

7. Tour hybride selon l'une des revendications 1 à 6,
**caractérisée en ce**
**que** la couronne de la partie de tour inférieure est réalisée en tant qu'anneau (2, 2') fabriqué en béton prêt à l'emploi.

8. Tour hybride selon la revendication 7,
**caractérisée en ce que** l'anneau (2, 2') est réalisé en tant que transition d'une partie de tour ronde ou angulaire, segmentée, en béton vers une partie de tour ronde, fermée, en béton.
